(19)

Europäisches Patentamt
European Patent Office
Office européen des brevets

(11)  **EP 4 497 579 A1**

(12)  **EUROPEAN PATENT APPLICATION**
published in accordance with Art. 153(4) EPC

(43) Date of publication:
**29.01.2025 Bulletin 2025/05**

(21) Application number: **23774754.8**

(22) Date of filing: **16.03.2023**

(51) International Patent Classification (IPC):
*B29C 65/40* (2006.01)        *B29C 45/14* (2006.01)
*B29C 65/70* (2006.01)        *B29C 70/68* (2006.01)

(52) Cooperative Patent Classification (CPC):
**B29C 45/14; B29C 65/40; B29C 65/70; B29C 70/68**

(86) International application number:
**PCT/JP2023/010371**

(87) International publication number:
**WO 2023/182158 (28.09.2023 Gazette 2023/39)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **22.03.2022   JP 2022044934**
        **22.03.2022   JP 2022044935**

(71) Applicant: **Toray Industries, Inc.
Tokyo 103-8666 (JP)**

(72) Inventors:
• **HONMA, Masato
  Iyo-gun
  Ehime 791-3193 (JP)**
• **HAMAGUCHI, Mitsushige
  Nagoya-shi
  Aichi 455-8502 (JP)**

(74) Representative: **Mewburn Ellis LLP
Aurora Building
Counterslip
Bristol BS1 6BX (GB)**

(54)  **INTEGRATED MOLDED COMPONENT AND METHOD FOR MANUFACTURING INTEGRATED MOLDED COMPONENT**

(57)    An object of the present invention is to manufacture an integrated molded component formed by bonding a fiber-reinforced thermosetting resin structural member having a hollow or solid columnar portion and another resin structural member with high productivity and in a strong bonded state. The present invention for solving the above problems is to provide an integrated molded component formed by bonding a structural member (a) consisting essentially of a fiber-reinforced thermosetting resin and having a hollow or solid columnar portion and a resin structural member (b), in which the resin structural member (b) has an overlap region overlapping an outer peripheral surface and/or an inner peripheral surface of the hollow columnar portion or the solid columnar portion of the structural member (a), and is bonded to the structural member (a) via a thermoplastic resin in at least a portion of the overlap region.

Figure 2

EP 4 497 579 A1

**Description**

TECHNICAL FIELD

The present invention relates to an integrated molded component formed by bonding a fiber-reinforced thermosetting resin structural member having a hollow or solid columnar portion and another resin structural member.

BACKGROUND ART

Fiber-reinforced composite materials are materials excellent in mechanical characteristics and lightweight properties, and are widely used as members of aircraft, automobiles, industrial equipment, and the like. In such applications, a frame structure having a fiber-reinforced composite material as a main skeleton may be adopted. In this case, it is necessary to form a member that can be connected to or attached to or detached from a portion of a frame member made of a fiber-reinforced composite material, but since such a member has a relatively complicated shape, it has been common to separately manufacture the member by injection molding or the like and fix the member to the frame member using an adhesive or a bolt. For example, Patent Document 1 discloses a method in which a bonded portion of a pipe made of a fiber-reinforced resin is bolted to be mechanically bonded to a bonding member. Patent Document 2 discloses a structure in which a pipe made of a carbon fiber-reinforced resin and a joint are bonded with an adhesive.

PRIOR ART DOCUMENT

PATENT DOCUMENTS

Patent Document 1: Japanese Patent Laid-open Publication No. H11-350592
Patent Document 2: Japanese Patent Laid-open Publication No. S62-295372

SUMMARY OF THE INVENTION

PROBLEMS TO BE SOLVED BY THE INVENTION

However, in the method disclosed in Patent Document 1, there is a concern that the strength may decrease due to bolt processing of a pipe, and there is also a problem that the weight increases due to the bolt itself. In addition, also in the method disclosed in Patent Document 2, the fact that a bonding state depends on a state of adhesive application causes deterioration of the reliability of bonding, and there is also a problem of weight increase due to adhesive application. In addition, in any method, a problem that productivity is lowered due to an increase in the number of steps cannot be avoided.
An object of the present invention is to produce a lightweight and highly rigid integrated molded component with high productivity and in a strong bonded state.

SOLUTIONS TO THE PROBLEMS

The present invention for solving the above-described problems is as follows.
An integrated molded component formed by bonding a structural member (a) consisting essentially of a fiber-reinforced thermosetting resin and having a hollow or solid columnar portion and a resin structural member (b), in which the resin structural member (b) has an overlap region overlapping an outer peripheral surface and/or an inner peripheral surface of the hollow columnar portion or the solid columnar portion of the structural member (a), and is bonded to the structural member (a) via a thermoplastic resin in at least a portion of the overlap region.

EFFECTS OF THE INVENTION

According to the present invention, it is possible to manufacture an integrated molded component in a lightweight and stable bonded state with high productivity.

BRIEF DESCRIPTION OF THE DRAWINGS

Fig. 1 is a schematic view illustrating an example of a joint as a resin structural member (b).

Fig. 2 is a schematic view illustrating an example of an integrated molded component in which the joint illustrated in Fig. 1 is bonded to a structural member (a).

Fig. 3 is a schematic view illustrating an example of a pedestal as a resin structural member (b).

Fig. 4 is a schematic view illustrating an example of the integrated molded component in which the pedestal illustrated in Fig. 3 is bonded to the structural member (a) .

Fig. 5 is a schematic view illustrating an example of a rib as the resin structural member (b).

Fig. 6 is a schematic view illustrating an example of the integrated molded component in which the rib illustrated in Fig. 5 is bonded to the structural member (a) .

Fig. 7 is a schematic view illustrating an example of a second hollow columnar body as the resin structural member (b).

Fig. 8 is a schematic view illustrating an example of the integrated molded component in which the second hollow columnar body illustrated in Fig. 7 is bonded to the structural member (a).

Fig. 9 is a sectional view illustrating an example of a bonded portion between the structural member (a) and the resin structural member (b).

Fig. 10 is a schematic view illustrating an example of the integrated molded component in which a thermoplastic resin is insert-molded between the structural member (a) and the resin structural member (b).

Fig. 11 is a perspective view illustrating an example of a cross section of a bonded portion of the integrated molded component in which the thermoplastic resin is insert-molded between the structural member (a) and the resin structural member (b).

EMBODIMENTS OF THE INVENTION

Hereinafter, preferable embodiments of the present invention will be described.

The integrated molded component according to the present invention is an integrated molded component formed by bonding a structural member (a) consisting essentially of a fiber-reinforced thermosetting resin and having a hollow or solid columnar portion at least in part to another resin structural member (b). In the present invention, "consisting essentially of a certain material" means that a material is contained as a main component, and is typically formed only of the material, but may contain other components as long as the effect of the invention is not lost.

As the fibers contained in the fiber-reinforced thermosetting resin of the structural member (a) in the present invention, fibers generally used as reinforcing fibers can be used. Examples thereof include glass fibers, polyacrylonitrile-based, rayon-based, lignin-based, and pitch-based carbon fibers (including graphite fibers), potassium titanate whiskers, zinc oxide whiskers, calcium carbonate whiskers, wollastonite whiskers, aluminum borate whiskers, aramid fibers, alumina fibers, silicon carbide fibers, ceramic fibers, asbestos fibers, gypsum fibers, and metal fibers. Among these, glass fibers, polyacrylonitrile-based and pitch-based carbon fibers are preferable, polyacrylonitrile-based and pitch-based carbon fibers are more preferable, and polyacrylonitrile-based carbon fibers are particularly preferable from the viewpoint of lightweight properties and mechanical characteristics.

The fibers contained in the structural member (a) are preferably surface-treated with a sizing agent from the viewpoint of improving the mechanical characteristics. Examples of the sizing agent include polyfunctional epoxy resins, acrylic acid-based polymers, polyhydric alcohols, and polyethyleneimines. Specific examples of the sizing agent include polyglycidyl ethers of an aliphatic polyhydric alcohol such as glycerol triglycidyl ether, diglycerol polyglycidyl ether, polyglycerol polyglycidyl ether, sorbitol polyglycidyl ether, arabitol polyglycidyl ether, trimethylolpropane triglycidyl ether, and pentaerythritol polyglycidyl ether, polyacrylic acid, copolymers of acrylic acid and methacrylic acid, copolymers of acrylic acid and maleic acid, mixtures of two or more thereof, polyvinyl alcohol, glycerol, diglycerol, polyglycerol, sorbitol, arabitol, trimethylolpropane, pentaerythritol, and polyethyleneimine including more amino groups in one molecule. Among these sizing agents, glycerol triglycidyl ether, diglycerol polyglycidyl ether, and polyglycerol polyglycidyl ether are preferably used in the present invention because they include many highly reactive epoxy groups in one molecule, have high water solubility, and are easy to apply to the fibers.

The sizing agent is preferably contained in an amount of 0.01 to 5 parts by mass and more preferably 0.1 to 2 parts by mass with respect to 100 parts by mass of the fibers.

The fibers contained in the structural member (a) are preferably continuous fibers. Here, the continuous fiber in the present specification means a fiber having a length of 10 mm or more, and as long as the fiber has this length, the fiber is not necessarily continuous over the entire member, and may be divided in the middle. Examples of the form of the continuous fiber include a cross woven fabric in which fiber bundles are woven, and a form in which filaments, braids, filament bundles, spun yarns, and the like are aligned in one direction. Further, the structural member (a) may be formed by using two or more kinds of these reinforcing fibers in combination.

The structural member (a) is preferably a molded body having a stacking structure obtained by stacking and molding prepreg sheets made of a fiber-reinforced thermosetting resin. When the prepreg sheet has a form in which reinforcing fibers are aligned in one direction, it is preferable to adopt a stacking configuration in which the angles of reinforcing fibers are combined in a direction of about 0°, a direction of about ±45°, a direction of about 90°, and the like, and a layer configuration having an angle other than the above may be included.

The mass content of fibers present in 100% by mass of the structural member (a) is preferably 20% to 70% by mass, more preferably 25% to 70% by mass, and particularly preferably 30% to 65% by mass. By setting the mass content of the fiber within the above range, the structural member (a) having high rigidity and good dimensional accuracy can be obtained.

The type of thermosetting resin constituting the fiber-reinforced thermosetting resin of the structural member (a) is not particularly limited, and examples thereof include an unsaturated polyester resin, a vinyl ester resin, an epoxy resin, a phenol (resol type) resin, a urea melamine resin, a polyimide resin, copolymers and modified products thereof, and resins obtained by blending at least two of these. Among them, the thermosetting resin containing an epoxy resin as a main component is more preferable from the viewpoint of mechanical characteristics of the molded component because of excellent rigidity and strength. The main component in the thermosetting resin means that the component ratio in the thermosetting resin is 60% by mass or more.

The fiber-reinforced thermosetting resin may contain other fillers or additives depending on the use and the like. Examples thereof include an elastomer or a rubber component, an inorganic filler, a flame retardant, a conductivity imparting agent, an antibacterial agent, an insect repellent, a deodorant, a coloring inhibitor, a mold release agent, an antistatic agent, a plasticizer, a coloring agent, a pigment, a dye, a foaming agent, an antifoaming agent, and a coupling agent.

In the present invention, the structural member (a) is a member having a hollow or solid columnar portion in at least a portion thereof. Here, the solid columnar shape means a solid shape in which no hollow exists in the hollow columnar portion. Typically, the structural member (a) may have a solid columnar or hollow columnar shape as a whole. Alternatively, the structural member (a) may have a hollow columnar or solid columnar portion and other shape portions. Further, when the hollow columnar portion is provided, the hollow columnar portion may have an uneven thickness in which the thickness of the hollow columnar portion changes. The hollow columnar or solid columnar portion of the structural member (a) may be curved.

When the structural member (a) has a hollow columnar portion, it is preferable from the viewpoint of light weight and high rigidity that the tubular portion has a longer length in a direction perpendicular to an opening surface than a diameter of a cross section (hereinafter, when a term "cross section" of the structural member (a) is used, it refers to a cross section parallel to the opening surface of the hollow columnar portion of the structural member (a)) parallel to the opening surface. In this case, the length of the tubular portion in a longitudinal direction is not particularly limited, and is preferably 0.05 m or more, more preferably 0.1 m or more, and particularly preferably 0.15 m or more. In addition, the thickness is preferably 3 m or less, more preferably 2 m or less, and particularly preferably 1 m or less when it is assumed to be used as a frame material constituting a frame structure of a drone or the like. It is a preferable aspect of the present invention that the structural member (a) is a hollow columnar body having a hollow columnar shape as a whole, and it is a particularly preferable aspect of the present invention that the structural member (a) is a member having a tubular shape as a whole, that is, a pipe-shaped member.

The cross-sectional shape of the hollow columnar portion or the solid columnar portion of the structural member (a) is not particularly limited, and is preferably circular or rectangular. In addition, a cross-sectional area of the hollow columnar portion or the solid columnar portion of the structural member (a) is preferably 20 mm$^2$ or more and more preferably 50 mm$^2$ or more. Further, it is preferably 300 mm$^2$ or less and more preferably 200 mm$^2$ or less. When the structural member (a) has a cross-sectional area in the above range, a highly rigid integrated molded component can be obtained with high productivity.

The structural member (a) consists essentially of a thermosetting resin. However, when at least a portion of an outer peripheral surface and/or an inner peripheral surface, typically a part to be bonded to the resin structural member (b), has the thermoplastic resin region exposed on the surface thereof, it is possible to easily form a state in which the structural member (a) and the resin structural member (b) are bonded to each other via the thermoplastic resin by thermal welding with the resin structural member (b), particularly, a state in which the thermoplastic resin is present on the surface of the structural member (a) positioned on the structural member (a) side from a bonding boundary surface as described later. Such a thermoplastic resin region is typically provided thinly on the surface of the structural member (a), and the thickness thereof is usually 1 to 300 μm and more preferably 50 to 150 μm.

When the hollow columnar portion or the solid columnar portion of the structural member (a) has a circular cross section and the thermoplastic resin region exists on the outer peripheral surface of the hollow columnar portion or the solid columnar portion, a distance La from a central axis of the hollow columnar portion or the solid columnar portion to an outermost layer and a distance Lb from the central axis of the hollow columnar portion or the solid columnar portion to an interface between the thermosetting resin and the thermoplastic resin region preferably satisfy the relationship of the following formula (1).

$$0.9 \leq Lb/La \leq 0.9999 \quad (1)$$

The form of such a thermoplastic resin region is not particularly limited as long as a region where the thermoplastic resin is exposed is formed on the surface of the inner peripheral surface or the outer peripheral surface of the hollow columnar portion or the solid columnar portion of the structural member (a), and examples thereof include a layered shape, a spot shape, a mesh shape, and a lattice shape.

As the thermoplastic resin constituting such a thermoplastic resin region, a polyolefin resin, a polyester resin, a polyamide resin, a polycarbonate resin, a polyphenylene sulfide resin, a polyimide resin, a polyamideimide resin, a polyetherimide resin, a polyetherketone resin, a polyetheretherketone resin, a polyetherketoneketone resin, a polyarylate resin, and the like are preferable.

A linear expansion coefficient of the thermoplastic resin constituting the thermoplastic resin region is preferably 60 ppm/°C or more, more preferably 70 ppm/°C or more, and preferably 200 ppm/°C or less, more preferably 150 ppm or less from the viewpoint of obtaining high bonding strength in a measurement temperature range of 60°C to 150°C.

When the thermoplastic resin region exists in the structural member (a), it is preferable that the interface between the thermosetting resin and the thermoplastic resin region of the structural member (a) forms an irregularity shape from the viewpoint of obtaining high bonding strength. Here, the fact that the interface forms an irregularity shape indicates that a boundary surface between the thermosetting resin and the thermoplastic resin region is not flat, and a boundary surface in which a form recessed toward the thermosetting resin side and a form recessed toward the thermoplastic resin region are mixed is formed. In this case, the depth of a dent is preferably 1 to 200 $\mu$m and more preferably 10 to 100 $\mu$m.

In the present invention, the method for manufacturing the structural member (a) is not particularly limited. When the structural member (a) is a hollow columnar body, examples of the manufacturing method include a method in which a prepreg or the like in which reinforcing fibers impregnated with a thermosetting resin are aligned by a filament winding method, a sheet winding method, or the like is wound around a mandrel to be shaped while applying a predetermined tension, and then cured, and a method in which a prepreg or the like is shaped by internal pressure molding using a shaping die or press molding and then cured. Examples of the method for forming the thermoplastic resin region on at least a portion of the outer peripheral surface or the inner peripheral surface of the structural member (a) include a method in which, in the above method, at least one layer of a film made of a thermoplastic resin is wound and cured integrally with a thermosetting resin.

The resin structural member (b) in the present invention may be a member consisting essentially of a thermoplastic resin. In this case, the thermoplastic resin is not particularly limited, and examples thereof include a polyolefin resin such as polyethylene or polypropylene, a polyester resin such as polyethylene terephthalate, polybutylene terephthalate, polyethylene naphthalate (PEN), polybutylene naphthalate (PEN), or liquid crystal polyester, polycaproamide (nylon 6), polyhexamethylene adipamide (nylon 66), polypentamethylene adipamide (nylon 56), polyhexamethylene sebacamide (nylon 610), polyhexamethylene dodecamide (nylon 612), polyundecamide (nylon 11), polydodecanamide (nylon 12), a polycaproamide/polyhexamethylene adipamide copolymer (nylon 6/66), a polycaproamide/polyhexamethylene terephthalamide copolymer (nylon 6/6T), a polyhexamethylene adipamide/polyhexamethylene terephthalamide copolymer (nylon 66/6T), a polyhexamethylene adipamide/polyhexamethylene isophthalamide copolymer (nylon 66/6I), a polyhexamethylene adipamide/polyhexamethylene isophthalamide/caproamide copolymer (nylon 66/6I/6), a polyhexamethylene terephthalamide/polyhexamethylene isophthalamide copolymer (nylon 6T/6I), a polyhexamethylene terephthalamide/polydodecanamide copolymer (nylon 6T/12), a polyhexamethylene adipamide/polyhexamethylene terephthalamide/polyhexamethylene isophthalamide copolymer (nylon 66/6T/6I), a polyhexamethylene terephthalamide/poly-2-methylpentamethylene terephthalamide copolymer (nylon 6T/M5T), a polyamide resin such as polyhexamethylene terephthalamide (nylon 9T), a polycarbonate resin, a polyphenylene sulfide (PPS) resin, a polyacetal resin or a polyoxymethylene resin, a polyimide (PI) resin, a polyamideimide (PAI) resin, a polyetherimide resin, a polysulfone resin, a polyether ketone (PEK) resin, a polyether ether ketone (PEEK) resin, a polyether ketone ketone (PEKK) resin, a polytetrafluoroethylene resin, a polyarylate (PAR) resin, and resins obtained by blending at least two of these resins. Among them, a polyolefin resin, a polyester resin, a polyamide resin, and a PPS resin are preferable.

In addition, from the viewpoint of the bonding strength between the structural member (a) and the resin structural member (b), when the structural member (a) has a thermoplastic resin region, the thermoplastic resin constituting the thermoplastic resin region and the thermoplastic resin present on the surface of the resin structural member (b) in a region to be bonded to the structural member (a) of the resin structural member (b), that is, in an overlap region to be described later are preferably the same kind.

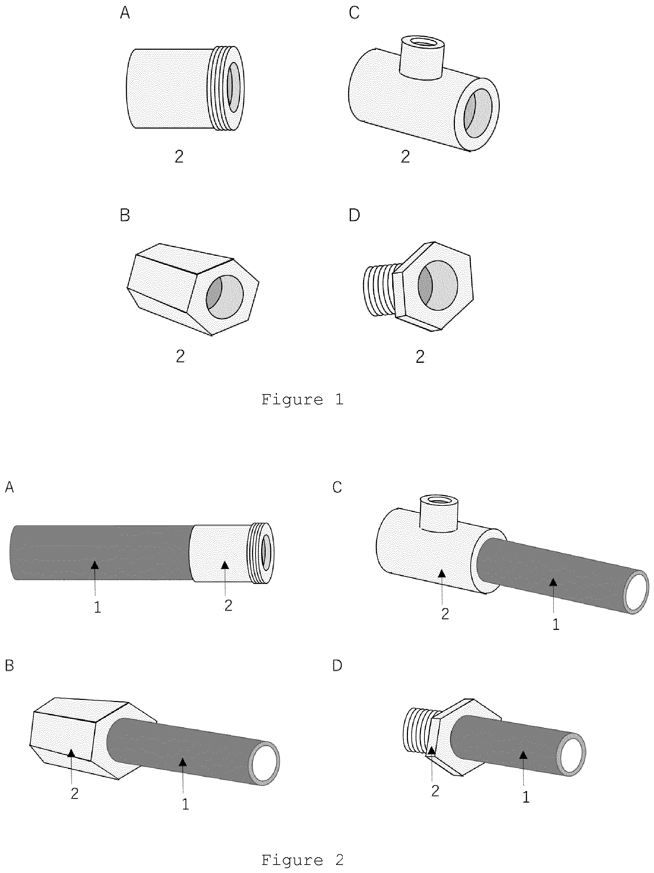

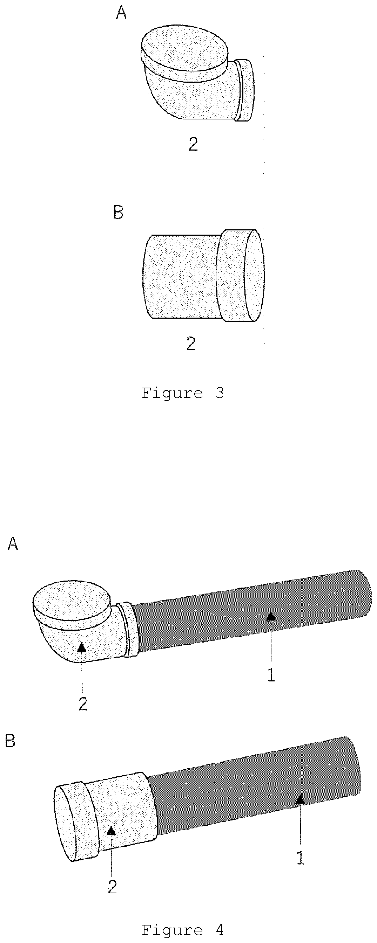

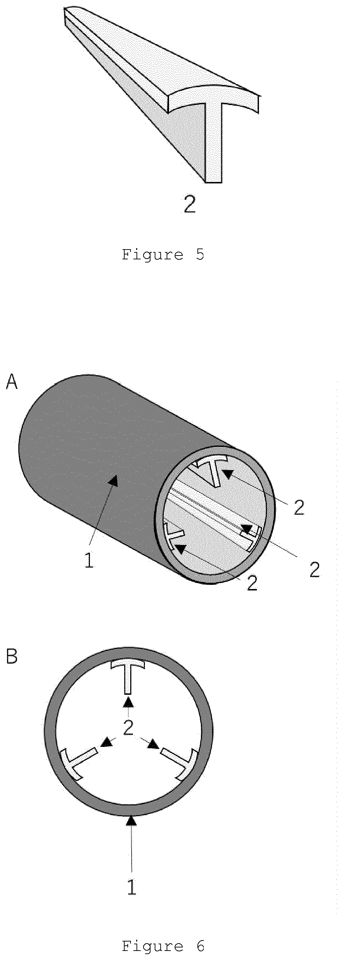

When the resin structural member (b) consists essentially of a thermoplastic resin, the resin structural member (b) is preferably any member of a joint, a pedestal, or a rib. Typically, the joint is a member for linking two hollow columnar portions or solid columnar portions, changing a direction, connecting hollow columnar portions or solid columnar portions having different thicknesses, or merging or branching three or more hollow columnar portions or solid columnar portions. The pedestal is a member for receiving and placing the hollow columnar portion or the solid columnar portion. The rib is a member for improving the strength and rigidity of the hollow columnar portion or the solid columnar portion by forming the plate-shaped protrusion. In the present invention, at least one of these hollow columnar portions is the structural member (a) having the above-described hollow columnar portion, and in a preferable aspect, all of them are the above-described hollow columnar portions. Figs. 1A to 1D illustrate a typical joint, Figs. 2A to 2D illustrate an integrated molded component in which the structural member (a) (hollow columnar body) and the joint are integrated, Figs. 3A to 3B illustrate a typical pedestal, Figs. 4A to 4B illustrate an integrated molded component in which the structural member (a) (hollow columnar body) and the pedestal are integrated, Fig. 5 illustrates a typical rib, and Figs. 6A to 6B illustrate a schematic view of an integrated molded component in which the structural member (a) (hollow columnar body) and the rib are integrated, but the respective structures are not limited thereto.

The resin structural member (b) may be a member consisting essentially of a thermosetting resin. In this case, the thermosetting resin is not particularly limited, and examples thereof include an unsaturated polyester resin, a vinyl ester resin, an epoxy resin, a phenol (resol type) resin, a urea melamine resin, a polyimide resin, copolymers and modified products thereof, and resins obtained by blending at least two of these, as with the structural member (a). Among them, the thermosetting resin containing an epoxy resin as a main component is more preferable from the viewpoint of mechanical characteristics of the molded component because of excellent rigidity and strength. Furthermore, other fillers and additives may be contained depending on the use and the like. Examples thereof include an elastomer or a rubber component, an inorganic filler, a flame retardant, a conductivity imparting agent, an antibacterial agent, an insect repellent, a deodorant, a coloring inhibitor, a mold release agent, an antistatic agent, a plasticizer, a coloring agent, a pigment, a dye, a foaming agent, an antifoaming agent, and a coupling agent.

In the present invention, when the resin structural member (b) consists essentially of a thermosetting resin, the resin structural member (b) may have a thermoplastic resin region in which the thermoplastic resin is exposed on at least a portion of the surface thereof. As a result, the structural member (a) and the resin structural member (b) can be bonded to each other by thermal welding with the thermoplastic resin region interposed therebetween. In a more preferable aspect, both the structural member (a) and the resin structural member (b) have such a thermoplastic resin region, and the thermoplastic resin region of the structural member (a) and the thermoplastic resin region of the resin structural member (b) are bonded by thermal welding. When both the structural member (a) and the resin structural member (b) have a thermoplastic resin region, it is preferable that both the structural member (a) and the resin structural member (b) have the same kind of thermoplastic resin region from the viewpoint of bonding strength between the structural member (a) and the resin structural member (b).

Such a thermoplastic resin region is typically provided thinly on the surface of the resin structural member (b), and the thickness thereof is usually 1 to 300 um and more preferably 50 to 150 um. The form of the thermoplastic resin region is not particularly limited as long as a region where the thermoplastic resin is exposed is formed on the surface of the resin structural member (b), and examples thereof include a layered shape, a spot shape, a mesh shape, and a lattice shape.

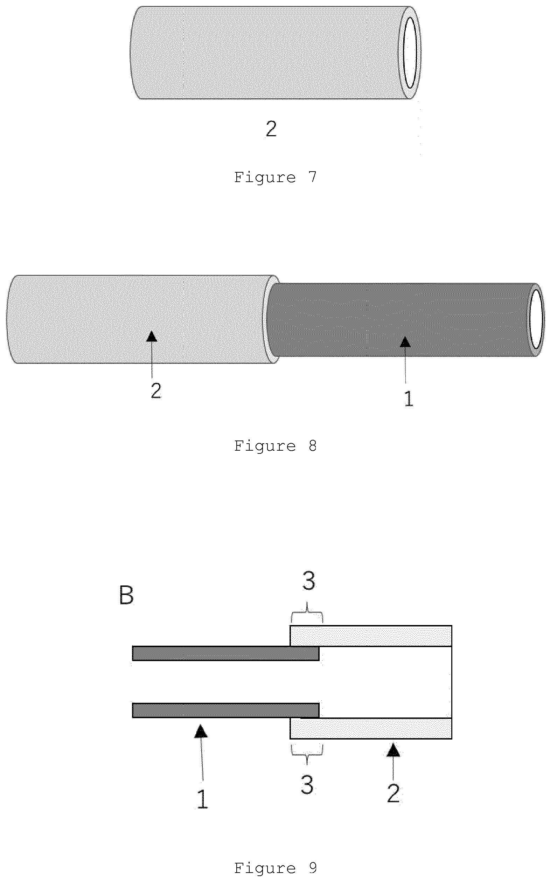

When the resin structural member (b) consists essentially of a thermosetting resin, the resin structural member (b) is preferably a hollow columnar body. Typically, the hollow columnar body is a hollow columnar body having a length, a diameter, a thickness, and the like different from those of the hollow columnar portion or the solid columnar portion of the structural member (a). Fig. 7 illustrates a schematic view of a representative hollow columnar body, and Fig. 8 illustrates a schematic view of an integrated molded component in which a structural member (a)1 (first hollow columnar body) and a resin structural members (b)2 (second hollow columnar body) are integrated, but the respective structures are not limited thereto.

When the resin structural member (b) consists essentially of a thermosetting resin, since the shape change of each member due to heat input at the time of bonding is extremely small, an integrated molded component with high dimensional accuracy is obtained, and the concentricity indicating the center deviation of the cross sections of the structural member (a) and the resin structural member (b) is preferably 0.25 mm or less. The concentricity can be measured by measuring positions of three outer diameter points of each of the structural member (a) and the resin structural member (b) using a CNC three-dimensional measuring machine and comparing center positions obtained from the positions.

The resin structural member (b) may contain reinforcing fibers in order to improve the mechanical characteristics. Examples of the reinforcing fibers include fibers selected from the same options as those of the fiber-reinforced thermosetting resin constituting the structural member (a) described above, and carbon fibers are preferable from the viewpoint of the lightweight properties and the mechanical characteristics. These fibers may be subjected to a surface treatment such as a treatment with a coupling agent, a treatment with a sizing agent, or an additive adhesion treatment.

The mass content of fibers present in 100% by mass of the resin structural member (b) is preferably 20% to 70% by mass, more preferably 25% to 70% by mass, and particularly preferably 30% to 65% by mass. By setting the mass content of the fiber within the above range, the resin structural member (b) having high rigidity and good dimensional accuracy can be obtained.

When the resin structural member (b) has a relatively complicated shape, the reinforcing fibers contained in the resin structural member (b) are preferably discontinuous reinforcing fibers from the viewpoint of molding processability. In this case, a mass average fiber length Lw of the reinforcing fibers is preferably 0.3 mm or more and more preferably 0.8 mm or more. The longer the mass average fiber length, the higher the effect of improving strength and rigidity, and in particular, the effect of significantly improving impact strength can be obtained. The upper limit of the mass average fiber length Lw is preferably 3.0 mm or less, more preferably 1.5 mm or less, and particularly preferably 1.0 mm or less. By setting the mass average fiber length Lw in this range, a balance of strength, rigidity and workability becomes good. The mass average fiber lengths of the resin structural member (b) of the present invention are not all the same, and may have a fiber length distribution. The mass average fiber length of the carbon fiber is determined by the following method. That is, a sample is cut out from the resin structural member (b), and the cut test piece is immersed in a solvent in which the thermoplastic resin contained in the resin structural member (b) is soluble for 24 hours to dissolve the resin component. The test piece in which the resin component is dissolved is observed with a microscope at a magnification of 100 times. In this observation, the fiber length Li of each of 400 optional fibers in the field of view is measured and calculated on the basis of the following equation.

$$\text{Mass average fiber length Lw} = (\Sigma Li^2)/(\Sigma Li)$$

In the integrated molded component of the present invention, the resin structural member (b) has an overlap region overlapping the outer peripheral portion and/or the inner peripheral portion of the hollow columnar portion or the solid columnar portion of the structural member (a), and is bonded to the structural member (a) by thermal welding via a thermoplastic resin in at least a portion of the overlap region. The fact that the resin structural member (b) overlaps the outer peripheral surface and/or the inner peripheral surface of the hollow columnar portion of the structural member (a) means that the outer peripheral surface or the inner peripheral surface of the hollow columnar portion of the structural member (a), or both surfaces thereof, and at least a portion of the resin structural member (b) are in surface contact with each other. Further, the fact that the resin structural member (b) overlaps the outer peripheral surface of the solid columnar portion of the structural member (a) means that the outer peripheral surface of the solid columnar portion of the structural member (a) and at least a portion of the resin structural member (b) are in surface contact with each other. The overlap region means a region in contact with the overlap region. Fig. 9 illustrates an embodiment in which a joint 2 is bonded to the outer peripheral surface of the structural member (a)1 as the resin structural member (b), but in this embodiment, the inner peripheral surface of the hollow columnar resin structural member (b) is in contact with the outer peripheral surface of the structural member (a) so as to surround the entire circumference of the outer peripheral surface of the structural member (a). That is, the resin structural member (b) overlaps the structural member (a) on the entire circumference thereof. The resin structural member (b) may be in contact with only a portion of the outer peripheral surface or the inner peripheral surface of the structural member (a) instead of the entire periphery of the outer peripheral surface or the inner peripheral surface. However, in order to exhibit strong bonding strength, it is preferable that the resin structural member (b) is in contact with the hollow columnar portion of the structural member (a) in a range of 50% or more and 100% (entire periphery) or less, and it is particularly preferable that the resin structural member (b) is in contact with the hollow columnar portion of the structural member (a) at 100% (entire periphery) to form a closed cross section. When the resin structural member (b) is bonded to the hollow columnar portion of the structural member (a), which one of the outer peripheral surface and the inner peripheral surface is overlapped to be bonded to the resin structural member (b) should be determined according to the intended member, but from the viewpoint of productivity, it is preferable to overlap the outer peripheral surface of the hollow columnar portion of the structural member (a) to be bonded to the resin structural member (b). The integrated molded component may include both the resin structural member (b) that is bonded to the outer peripheral surface in an overlapping manner and the resin structural member (b) that is bonded to the inner peripheral surface in an overlapping manner.

In the bonded portion between the structural member (a) and the resin structural member (b), the thermoplastic resin is preferably present on the surface of the structural member (a) positioned on the structural member (a) side from the bonding boundary surface. Here, a state in which the thermoplastic resin is present on the surface of the structural member (a) positioned on the structural member (a) side from the bonding boundary surface refers to a state in which the thermoplastic resin is present on the structural member (a) side from a line, as the bonding boundary surface, forming the outer periphery of the hollow columnar portion or the solid columnar portion of the structural member (a) in the cross section of the bonded portion.

In the bonded portion between the structural member (a) and the resin structural member (b) of the present invention, it is preferable that a portion of the fiber included in the structural member (a) is in contact with both the thermosetting resin and the thermoplastic resin region of the structural member (a) in a state of straddling the thermosetting resin and the thermoplastic resin region constituting the structural member (a). By forming such a bonding structure, a stronger bonding state can be formed due to the fiber reinforcing effect.

The bonding strength between the structural member (a) and the resin structural member (b) of the present invention is preferably 7 MPa or more and more preferably 10 MPa or more. The upper limit of the bonding strength is not particularly limited, and is preferably 100 MPa or less from the viewpoint of obtaining the integrated molded component of the present invention with high productivity.

As an example, the integrated molded component including the structural member (a) and the resin structural member (b) of the present invention can be manufactured by bonding the structural member (a) and the resin structural member (b) by thermal welding by bringing at least one of the members into contact with each other in a heated state. Such a thermal welding method is not particularly limited, and can be integrated by hot plate welding, vibration welding, ultrasonic welding, far infrared ray thermal welding, dielectric thermal welding, laser welding, insert molding, outsert injection molding, or the like.

When the resin structural member (b) consists essentially of a thermoplastic resin, insert molding is preferable in that an integrated molded component that is particularly firmly bonded can be manufactured with high productivity. In the insert molding, the resin structural member (b) is molded and integrated by performing clamping in a state where the structural member (a) is inserted into an injection molding mold, and performing injection molding such that the thermoplastic resin of the resin structural member (b) overlaps the outer peripheral portion or the inner peripheral portion of the structural member (a). In addition, after the structural member (a) and the resin structural member (b), at least one of which has a thermoplastic resin region on the surface, are molded in advance, the resin structural member (b) may be brought into contact with the outer peripheral surface or the inner peripheral surface of the structural member (a) in a state where the structural member (a) or the resin structural member (b) having the thermoplastic resin region is heated, so that the structural member (a) and the resin structural member (b) are bonded to each other by thermal welding. Examples of such a method include far infrared ray thermal welding. In the far infrared ray thermal welding, the integrated molded component can be manufactured in such a manner that the structural member (a) and the resin structural member (b) are molded in advance, and then the resin structural member (b) is brought into contact with the outer peripheral portion or the inner peripheral portion of the structural member (a) so as to overlap with the outer peripheral portion or the inner peripheral portion of the structural member (a) in a state where the structural member (a) is heated, and the resin structural member (b) is cooled and solidified. The structural member (a) is preferably heated by a far infrared heater, to a temperature equal to or higher than a temperature at which the thermoplastic resin contained in the resin structural member (b) melts and softens.

When the resin structural member (b) consists essentially of a thermosetting resin, the integrated molded component can be manufactured by, as an example, a method for preparing a structural member (a) having a thermoplastic resin region on at least a portion of an outer peripheral surface or an inner peripheral surface of a hollow columnar portion or a solid columnar portion and/or a resin structural member (b) having a thermoplastic resin region on at least a portion of a surface, and bringing the structural member (a) and the resin structural member (b) into contact with each other in a heated state of the thermoplastic resin region such that the structural member (a) and the resin structural member (b) overlap each other in a region including the heated thermoplastic resin region. The method of such thermal welding is not particularly limited, and hot plate welding, vibration welding, ultrasonic welding, far infrared ray thermal welding, dielectric thermal welding, laser welding, and the like can be used. At this time, it is preferable to heat the thermoplastic resin constituting the thermoplastic resin region of the structural member (a) or the resin structural member (b) to a temperature equal to or higher than a temperature at which the thermoplastic resin is softened, and it is more preferable to heat the thermoplastic resin to a temperature equal to or higher than a temperature at which the thermoplastic resin is melted.

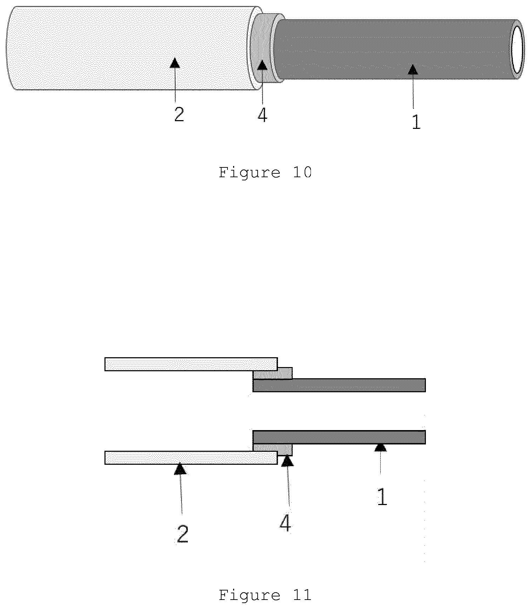

In addition, as another example, the integrated molded component of the present invention can also be manufactured by a method for injection-molding a thermoplastic resin between the overlapping structural member (a) and resin structural member (b) in a state where the structural member (a) and the resin structural member (b) are inserted into an injection molding mold such that the resin structural member (b) overlaps an outer peripheral surface and/or an inner peripheral surface of a hollow columnar portion or a solid columnar portion of the structural member (a). Fig. 10 is a schematic view of an embodiment in which a second hollow columnar body 2 as a resin structural member (b) is bonded to an outer peripheral surface of a structural member (a)1 as a first hollow columnar body via an injection-molded thermoplastic resin 4, and Fig. 11 is a sectional view of the bonded portion. The thermoplastic resin 4 only needs to be interposed between the outer peripheral surface and/or the inner peripheral surface of the hollow columnar portion or the solid columnar portion of the structural member (a) and the surface of the resin structural member (b), and is not limited to this drawing. As the thermoplastic resin species for injection molding in this case, the same resin as the resin described above can be used as the thermoplastic resin constituting the resin structural member (b). The thermoplastic resin for injection molding may contain reinforcing fibers in order to improve the mechanical characteristics. Examples of the reinforcing fibers include fibers selected from the same options as those of the fiber-reinforced thermosetting resin constituting the structural member (a) described above, and carbon fibers are preferable from the viewpoint of the lightweight properties and the mechanical characteristics. These fibers may be subjected to a surface treatment such as a treatment with a coupling agent, a treatment with a sizing agent, or an additive adhesion treatment.

The integrated molded component of the present invention can be suitably used as a member forming a frame structure because the resin structural member (b) capable of performing connection, joining, branching, stationary, and the like is firmly bonded to the lightweight and highly rigid structural member (a). Examples of such a structure include a body and an arm of an industrial robot, a body and an arm of an automobile, a motorcycle, a bicycle, an aircraft, a helicopter, a drone, a ship, a submersible, and the like, a building material, and the like. In particular, from the viewpoint of rigidity and lightweight properties, it is preferably used for a flying object such as an aircraft, a helicopter, and a drone. From the viewpoint of improving the performance of the flying object, an integrated molded component in which the length of the hollow columnar portion or the solid columnar portion of the structural member (a) is 0.05 m or more and 3 m or less is more preferable. In particular, in a relatively small flying object having a body weight of 1,000 kg or less, the integrated molded component of the present invention can be particularly suitably used because the influence of weight increase due to mechanical fastening such as bolts and fasteners is large.

Examples

Hereinafter, the present invention will be described more specifically with reference to Examples. The present invention is not limited to the description of Examples.

(Example 1)

"TORAYCA Prepreg" P3051S-30 and P3052S-12 manufactured by Toray Industries, Inc. were used in a release-treated stainless mandrel having a tip outer diameter of 30 mm, a taper -6.0/1000, and a length of 700 mm. When a longitudinal direction of the mandrel was set to an axis of 0 degrees, P3051S-30 was stacked so that a material angle was 0 degrees, and P3052S-12 was stacked so that the material angle was 60 degrees. Further, a 70 umthick polyamide film obtained by hot-pressing pellets of a copolymer polyamide resin (CM4000 manufactured by Toray Industries, Inc., polyamide 6/66/610, melting point: 150°C) was wound around the outer side of the laminate by one turn, a wrapping tape (heat-resistant film tape, width 10 mm) was wound around the laminate at a tension of 3 kg, and the laminate was heat-molded in a curing furnace at 150°C for 30 minutes. Thereafter, the mandrel was removed, the wrapping tape was removed, and the resulting product was cut to obtain a pipe 1 having a thickness of 0.5 mm and a length of 500 mm. Thereafter, the pipe was inserted into an injection molding mold using an injection molding machine (J 350EIII manufactured by The Japan Steel Works, Ltd.) set at a cylinder temperature of 280°C and a mold temperature of 80°C, and the joint illustrated in Fig. 1A was injection-molded using a long fiber pellet (TLP1060) manufactured by Toray Industries, Inc. so as to be in contact with the outer peripheral surface of a region 10 mm from an end portion of the outer peripheral surface of the pipe to manufacture an integrated molded component as illustrated in Fig. 2A.

For the obtained integrated molded components N=5, a drop test was performed in which the joint was dropped from a height of 1.5 m downward, and a bonding state between the pipe and the joint at that time was visually checked. As a result, no change was observed in the bonded portion in all the five samples, and a good bonded state was maintained.

For the obtained integrated molded components N=5, the bonded portion and the pipe were gripped with a jig, and a tensile test was conducted at a test speed of 0.5 mm/min at room temperature using a universal testing machine manufactured by Instron. As a result, the bonding strength at an average of N=5 was 45 MPa, and a good joint state was obtained.

(Example 2)

A pipe 1 was obtained in the same manner as in Example 1. Subsequently, by using an injection molding machine (J 350EIII manufactured by The Japan Steel Works, Ltd.) set at a cylinder temperature of 280°C and a mold temperature of 80°C, the joint illustrated in Fig. 1A was independently injection-molded using long fiber pellets (TLP1060) manufactured by Toray Industries, Inc. which are pellets of carbon fiber-reinforced polyamide 6. After the end portion of the pipe was heated to a surface temperature of 230°C using a far infrared heater, the joint was immediately pressed against the pipe at a pressure of 1 MPa for 15 seconds in a state where 10 mm from the end portion of the outer peripheral surface of the pipe and the inner peripheral surface were in contact with each other, and then cooled to produce an integrated molded component as illustrated in Fig. 2A.

As a result of performing a drop test of the integrated molded component in the same manner as in Example 1, no change was observed in the bonded portion in all five pieces, and a good bonded state was maintained.

The bonding strength was evaluated in the same manner as in Example 1, and consequently the bonding strength was 41 MPa, which was a good joint state.

(Example 3)

A 70 $\mu$m-thick polyamide film obtained by hot-pressing pellets of a copolymerized polyamide resin (CM4000 manufactured by Toray Industries, Inc., polyamide 6/66/610, melting point: 150°C) was wound one turn around a release-treated stainless mandrel having a tip outer diameter of 30 mm, a taper -6.0/1000, and a length of 700 mm. Then, by using "TORAYCA Prepreg" P3051S-30 and P3052S-12 manufactured by Toray Industries, Inc., when a longitudinal direction of the mandrel was set to an axis of 0 degrees, P3051S-30 was stacked so that a material angle was 0 degrees, and P3052S-12 was stacked so that the material angle was 60 degrees Furthermore, a wrapping tape (heat-resistant film tape, width 10 mm) was wound around the outer side thereof at a tension of 3 kg, and heat-molded in a curing furnace at 150°C for 30 minutes. Thereafter, the mandrel was removed, the wrapping tape was removed, and the resulting product was cut to obtain a pipe 2 having a thickness of 0.5 mm and a length of 500 mm.

Subsequently, by using an injection molding machine (J 350EIII manufactured by The Japan Steel Works, Ltd.) set at a cylinder temperature of 280°C and a mold temperature of 80°C, a rib as illustrated in Fig. 5 was independently injection-molded using long fiber pellets (TLP1060) manufactured by Toray Industries, Inc. which are pellets of carbon fiber-reinforced polyamide 6.

After the inner peripheral surface of the end portion of the pipe was heated to a surface temperature of 230°C by a far infrared heater, the rib was immediately pressed against the heated inner peripheral surface of the pipe at a pressure of 1 MPa for 15 seconds, and then cooled to manufacture an integrated molded component as illustrated in Fig. 6.

For the obtained integrated molded components N=5, a drop test was performed in which the rib bonded portion was dropped from a height of 1.5 m downward, and a bonding state between the pipe and the rib at that time was visually checked. As a result, no change was observed in the bonded portion in all the five samples, and a good bonded state was maintained.

(Example 4)

A pipe 1 was molded in the same manner as in Example 1. Next, a 70 μm-thick polyamide film obtained by hot-pressing pellets of a copolymerized polyamide resin (CM4000 manufactured by Toray Industries, Inc., polyamide 6/66/610, melting point: 150°C) was wound one turn around a release-treated stainless mandrel having a tip outer diameter of 31 mm, a taper -6.0/1000, and a length of 700 mm. Then, by using "TORAYCA Prepreg" P3051S-30 and P3052S-12 manufactured by Toray Industries, Inc., when a longitudinal direction of the all shaft was set to an axis of 0 degrees, P3051S-30 was stacked so that a material angle was 0 degrees, and P3052S-12 was stacked so that the material angle was 60 degrees Furthermore, a wrapping tape (heat-resistant film tape, width 10 mm) was wound around the outer side thereof at a tension of 3 kg, and heat-molded in a curing furnace at 150°C for 30 minutes. Thereafter, the mandrel was removed, the wrapping tape was removed, and the resulting product was cut to obtain a pipe 3 having a thickness of 0.5 mm and a length of 500 mm.

Thereafter, the end portion of the pipe 1 was heated to a surface temperature of 230°C using a far infrared heater, and then the pipe 3 was immediately pressed against the pipe 1 for 15 seconds in a state where 10 mm from the end portion of the outer peripheral surface of the pipe 1 and the inner peripheral surface were in contact with each other, and then cooled to produce an integrated molded component as illustrated in Fig. 8.

For the obtained integrated molded components N=5, a drop test was performed in which the pipe 3 was dropped from a height of 1.5 m downward, and a bonding state at that time was visually checked. As a result, no change was observed in the bonded portion in all the five samples, and a good bonded state was maintained.

For the obtained integrated molded components N=5, the concentricity was evaluated by comparing the center positions obtained by measuring the positions of three points of the outer diameter of each of the pipes 1 and 3 using a CNC three-dimensional measuring machine CRYSTA Apex S9108 manufactured by Mitutoyo Corporation, and the concentricity was as high as 0.16 mm with high dimensional accuracy.

(Example 5)

The pipe 1 was molded in the same manner as in Example 1, and then the pipe 4 was molded in the same manner as in Example 1 except that the outer diameter of the tip end of the stainless mandrel was changed to 32 mm.

Next, the pipe 1 and the pipe 4 were inserted into the mold using an injection molding machine (J 350EIII manufactured by The Japan Steel Works, Ltd.) set at a cylinder temperature of 280°C and a mold temperature of 80°C. At this time, a long fiber pellet (TLP1060) manufactured by Toray Industries, Inc., which was a pellet of carbon fiber-reinforced polyamide 6 inserted at a position where 10 mm from the end portion of the outer peripheral surface of the pipe 1 entered the inside of the pipe 4, was injection-molded between the pipe 1 and the pipe 4 to obtain an integrated molded component as illustrated in Fig. 10.

As a result of performing a drop test of the integrated molded component in the same manner as in Example 4, no change was observed in the bonded portion in all five pieces, and a good bonded state was maintained.

When the concentricity of the integrated molded component was evaluated in the same manner as in Example 4, the concentricity was 0.12 mm, indicating high dimensional accuracy.

(Comparative example 1)

A pipe 1 and a joint were manufactured in the same manner as in Example 2. Using a two-pack type epoxy adhesive (SWANBOND 4000 manufactured by Takada Chemical Products Mfg. Co., Ltd.), equal amounts of two liquids were uniformly mixed at room temperature, and immediately applied to the outer peripheral surface of 10 mm from the end portion of the pipe 1, and in a state where 10 mm from the end portion of the outer peripheral surface of the pipe 1 and the inner peripheral surface were in contact with each other, the joint was fitted to the pipe 1 and fixed with a vise, and bonded at 25°C for 24 hours to produce an integrated molded component.

As a result of performing a drop test of the integrated molded component in the same manner as in Example 1, cracks were found in two of five bonded portions.

The bonding strength was evaluated in the same manner as in Example 1, and the result was 5 MPa.

(Comparative example 2)

A pipe 1 and a pipe 3 were manufactured in the same manner as in Example 4. An integrated molded component was manufactured in the same manner as in Comparative Example 1 using a two-pack epoxy adhesive (SWANBOND 4000 manufactured by Takada Chemical Products Mfg. Co., Ltd.).

As a result of performing a drop test of the integrated molded component in the same manner as in Example 4, cracks were found in three of five bonded portions.

When the concentricity of the integrated molded component was evaluated in the same manner as in Example 4, the concentricity was 0.92 mm.

DESCRIPTION OF REFERENCE SIGNS

1: Structural member (a) (first hollow columnar body)
2: Resin structural member (b) (joint, pedestal, rib, or second hollow columnar body)
3: Overlap region
4: Thermoplastic resin

**Claims**

1. An integrated molded component formed by bonding a structural member (a) consisting essentially of a fiber-reinforced thermosetting resin and having a hollow or solid columnar portion and a resin structural member (b), wherein the resin structural member (b) has an overlap region overlapping an outer peripheral surface and/or an inner peripheral surface of the hollow columnar portion or the solid columnar portion of the structural member (a), and is bonded to the structural member (a) via a thermoplastic resin in at least a portion of the overlap region.

2. The integrated molded component according to claim 1, wherein the thermoplastic resin is present on a surface of the structural member (a) positioned on a structural member (a) side from a bonding boundary surface at a part where the structural member (a) and the resin structural member (b) are bonded.

3. The integrated molded component according to claim 2, wherein the hollow columnar portion or the solid columnar portion of the structural member (a) has a thermoplastic resin region exposed on a surface of an outer peripheral surface and/or an inner peripheral surface thereof, and the structural member (a) and the resin structural member (b) are bonded via the thermoplastic resin of the thermoplastic resin region.

4. The integrated molded component according to claim 3, wherein the thermoplastic resin constituting the thermoplastic resin region has a linear expansion coefficient of 60 ppm/°C or more and 200 ppm/°C or less.

5. The integrated molded component according to claim 3, wherein fibers included in the structural member (a) are continuous fibers and are in contact with both the thermosetting resin and the thermoplastic resin region constituting the structural member (a).

6. The integrated molded component according to claim 3, wherein the hollow columnar portion or the solid columnar portion of the structural member (a) has a circular cross section, and a distance La from a central axis of the structural member (a) to an outermost layer and a distance Lb from the central axis to an interface between the thermosetting resin and the thermoplastic resin region satisfy a relationship of formula (1):

$$0.9 \leq Lb/La \leq 0.9999 \ (1).$$

7. The integrated molded component according to any one of claims 1 to 6, wherein the resin structural member (b) is an injection-molded member consisting essentially of a thermoplastic resin, or the resin structural member (b) is a member consisting essentially of the thermosetting resin and having the thermoplastic resin region on at least a portion of the surface.

8. The integrated molded component according to any one of claims 1 to 6, wherein a bonding strength between the structural member (a) and the resin structural member (b) is 7 MPa or more and 100 MPa or less.

9. The integrated molded component according to any one of claims 1 to 6, wherein the resin structural member (b) is bonded in a range of 50% or more and 100% or less of a circumferential length of the hollow columnar portion or the solid columnar portion in the overlap region.

10. The integrated molded component according to any one of claims 1 to 6, wherein the structural member (a) is a member having a tubular shape as a whole.

11. The integrated molded component according to any one of claims 1 to 6, wherein the resin structural member (b) is any one of a joint, a pedestal, and a rib that are consisting essentially of the thermoplastic resin.

12. The integrated molded component according to any one of claims 1 to 6, wherein the resin structural member (b) is a hollow columnar body consisting essentially of the thermosetting resin, and concentricity of the structural member (a) and the resin structural member (b) is 0.25 mm or less.

13. A frame structure comprising the integrated molded component according to any one of claims 1 to 6.

14. A flying object comprising the integrated molded component according to any one of claims 1 to 6.

15. The flying object according to claim 14, wherein the structural member (a) has a length of 0.05 m or more and 3 m or less and/or a body weight of 1,000 kg or less.

16. A method for manufacturing an integrated molded component in which a structural member (a) consisting essentially of a fiber-reinforced thermosetting resin and having a hollow or solid columnar portion and a resin structural member (b) are bonded, the method comprising:
bonding the structural member (a) and the resin structural member (b) by thermal welding by any one of the following methods (1) to (3):

(1) injection-molding the resin structural member (b) so as to overlap with an outer peripheral surface and/or an inner peripheral surface of the structural member (a) in a state where the structural member (a) is inserted into an injection molding mold;
(2) after molding the structural member (a) and the resin structural member (b), at least one of which has a thermoplastic resin region on the surface, in advance, bringing the resin structural member (b) into contact with the outer peripheral surface or the inner peripheral surface of the structural member (a) in a state where the structural member (a) or the resin structural member (b) having the thermoplastic resin region is heated;
(3) injection-molding a thermoplastic resin between the overlapping structural member (a) and resin structural member (b) in a state where the structural member (a) and the resin structural member (b) are inserted into the injection molding mold such that the resin structural member (b) overlaps the outer peripheral surface and/or the inner peripheral surface of the structural member (a).

A

C

2

2

B

D

2

2

Figure 1

A

C

1　　　2

2　　　1

B

D

2　　　1

2　　　1

Figure 2

A

2

B

2

Figure 3

A

2  1

B

2  1

Figure 4

Figure 5

Figure 6

Figure 7

Figure 8

Figure 9

2        4                1

Figure 10

2        4        1

Figure 11

## INTERNATIONAL SEARCH REPORT

| International application No. |
| --- |
| **PCT/JP2023/010371** |

### A. CLASSIFICATION OF SUBJECT MATTER

**B29C 65/40**(2006.01)i; **B29C 45/14**(2006.01)i; **B29C 65/70**(2006.01)i; **B29C 70/68**(2006.01)i
FI:  B29C65/40; B29C70/68; B29C65/70; B29C45/14

According to International Patent Classification (IPC) or to both national classification and IPC

### B. FIELDS SEARCHED

Minimum documentation searched (classification system followed by classification symbols)

B29C65/40; B29C45/14; B29C65/70; B29C70/68

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
| --- | --- | --- |
| Y | JP 2021-091151 A (SANKO GOSEI LTD) 17 June 2021 (2021-06-17)<br>paragraphs [0013]-[0023], fig. 5-10 | 1-16 |
| Y | JP 2007-168231 A (TOHO TENAX CO LTD) 05 July 2007 (2007-07-05)<br>paragraph [0002] | 1-16 |
| Y | WO 2019/163578 A1 (MONJU KOGAKU IGAKU KENKYUSHO KK) 29 August 2019 (2019-08-29)<br>paragraph [0002] | 14-15 |
| A | JP 2021-081033 A (SEKISUI CHEMICAL CO LTD) 27 May 2021 (2021-05-27)<br>entire text, all drawings | 1-16 |
| A | JP 06-114876 A (CHIEN, Shiyunnsen) 26 April 1994 (1994-04-26)<br>entire text, all drawings | 1-16 |

☐ Further documents are listed in the continuation of Box C.　　☑ See patent family annex.

| | |
| --- | --- |
| *　Special categories of cited documents:<br>"A"　document defining the general state of the art which is not considered to be of particular relevance<br>"E"　earlier application or patent but published on or after the international filing date<br>"L"　document which may throw doubts on priority claim(s) or which is cited to establish the publication date of another citation or other special reason (as specified)<br>"O"　document referring to an oral disclosure, use, exhibition or other means<br>"P"　document published prior to the international filing date but later than the priority date claimed | "T"　later document published after the international filing date or priority date and not in conflict with the application but cited to understand the principle or theory underlying the invention<br>"X"　document of particular relevance; the claimed invention cannot be considered novel or cannot be considered to involve an inventive step when the document is taken alone<br>"Y"　document of particular relevance; the claimed invention cannot be considered to involve an inventive step when the document is combined with one or more other such documents, such combination being obvious to a person skilled in the art<br>"&"　document member of the same patent family |

| Date of the actual completion of the international search | Date of mailing of the international search report |
| --- | --- |
| **25 April 2023** | **23 May 2023** |

| Name and mailing address of the ISA/JP | Authorized officer |
| --- | --- |
| **Japan Patent Office (ISA/JP)**<br>**3-4-3 Kasumigaseki, Chiyoda-ku, Tokyo 100-8915**<br>**Japan** | |
| | Telephone No. |

Form PCT/ISA/210 (second sheet) (January 2015)

INTERNATIONAL SEARCH REPORT
Information on patent family members

International application No.

**PCT/JP2023/010371**

| Patent document cited in search report | | | Publication date (day/month/year) | Patent family member(s) | | | Publication date (day/month/year) |
|---|---|---|---|---|---|---|---|
| JP | 2021-091151 | A | 17 June 2021 | (Family: none) | | | |
| JP | 2007-168231 | A | 05 July 2007 | (Family: none) | | | |
| WO | 2019/163578 | A1 | 29 August 2019 | JP | 2019-143021 | A | |
| | | | | paragraph [0002] | | | |
| JP | 2021-081033 | A | 27 May 2021 | (Family: none) | | | |
| JP | 06-114876 | A | 26 April 1994 | (Family: none) | | | |

Form PCT/ISA/210 (patent family annex) (January 2015)

**EP 4 497 579 A1**

**Patent documents cited in the description**

- JP H11350592 A

- JP S62295372 A